(19) Europäisches Patentamt
European Patent Office
Office européen des brevets

(11) **EP 2 917 684 B1**

(12) **EUROPÄISCHE PATENTSCHRIFT**

(45) Veröffentlichungstag und Bekanntmachung des Hinweises auf die Patenterteilung:
**08.05.2019   Patentblatt 2019/19**

(21) Anmeldenummer: **13815674.0**

(22) Anmeldetag: **06.11.2013**

(51) Int Cl.:
***G01B 5/06*** (2006.01)

(86) Internationale Anmeldenummer:
**PCT/AT2013/050209**

(87) Internationale Veröffentlichungsnummer:
**WO 2014/071430 (15.05.2014 Gazette 2014/20)**

(54) **MESSEINRICHTUNG UND MESSVERFAHREN ZUM MESSEN DER DICKE EINES PLATTENFÖRMIGEN GEGENSTANDS**

MEASUREMENT DEVICE AND MEASUREMENT METHOD FOR MEASURING THE THICKNESS OF A PANEL-SHAPED OBJECT

DISPOSITIF ET PROCÉDÉ DE MESURE PERMETTANT DE MESURER L'ÉPAISSEUR D'UN OBJET EN FORME DE PLAQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2012   AT 504962012**

(43) Veröffentlichungstag der Anmeldung:
**16.09.2015   Patentblatt 2015/38**

(73) Patentinhaber: **TRUMPF Maschinen Austria GmbH & Co. KG.**
**4061 Pasching (AT)**

(72) Erfinder:
• **AUZINGER, Michael**
**A-4040 Linz (AT)**
• **DENKMEIER, Thomas**
**A-4050 Traun (AT)**
• **HASELBÖCK, Alfred**
**A-4150 Rohrbach (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
WO-A1-2006/068949      WO-A1-2011/000665
DE-A1- 4 008 149      DE-A1-102009 011 122
JP-A- H07 280 526      US-A1- 2005 039 342

**Beschreibung**

Die Erfindung betrifft eine Biegemaschine zum Biegen eines plattenförmigen Gegenstands mit einer Messeinrichtung zum Messen einer Dicke eines plattenförmigen Gegenstands, umfassend einen ersten Messtaster, welcher dazu eingerichtet ist, eine erste Position eines Berührpunkts des ersten Messtasters mit einer ersten Fläche des plattenförmigen Gegenstands zu messen. Weiterhin betrifft die Erfindung ein Verfahren zum Biegen eines plattenförmigen Gegenstands, bei dem eine Dicke des plattenförmigen Gegenstands gemessen wird, wobei eine erste Position eines Berührpunkts eines ersten Messtasters mit einer ersten Fläche des plattenförmigen Gegenstands gemessen wird.

Eine Messeinrichtung sowie ein Messverfahren der genannten Art sind grundsätzlich bekannt. Dabei wird der zu vermessende Gegenstand auf einer Seite mit einem Messtaster berührt und seine Dicke aufgrund der Differenz der Position des ersten Berührpunkts zu einer Auflagefläche des zu vermessenden Gegenstands bestimmt. Auf dieser Auflage liegt der zu vermessende Gegenstand mit einer zweiten Fläche auf, welcher der ersten Fläche gegenüber liegt. Beispielsweise kann der Messtaster an die genannte Auflage geführt werden, um einen Nullpunkt festzulegen. Wird dann der Taster an die erste Fläche des plattenförmigen Gegenstands, welcher auf dieser Auflage liegt, herangeführt, so kann dessen Dicke leicht ermittelt werden. Beispielsweise offenbart die Die DE 40 08 149 A1 dazu eine CNC-gesteuerte Abkantvorrichtung für plattenförmige Werkstücke mit einem durch Stellglieder betätigbaren Stempel, die zur Erzielung einer gleichmäßigen Verformung eines Werkstückes bei unterschiedlicher Dicke des Werkstücks eine längs des Umfangs und in unterschiedlichem Abstand zum Umfang eines Werkstücks bewegliche Dickenmesseinrichtung aufweist, die mit dem Rechner der Vorrichtung zur Steuerung der Stellglieder des Stempels verbunden ist.

Diese Messeinrichtung und dieses Messverfahren sind einfach und liefern an sich zuverlässige Werte, allerdings nur unter bestimmten Voraussetzungen. Eine davon ist, dass der plattenförmige Gegenstand im Bereich des ersten Berührpunkts auch tatsächlich auf der Auflage aufliegen muss, das heißt dass Körperkontakt zwischen der zweiten Fläche des plattenförmigen Gegenstands und der Auflage vorliegen muss. Allerdings darf die Auflage dabei nicht übermäßig in die zweite Fläche eingedrückt werden, da dies ebenfalls die Messung verfälschen würde. Eine weitere Voraussetzung ist, dass die Bewegungsrichtung eines linear verschiebbaren Messtössels normal auf die erste Fläche des plattenförmigen Gegenstands, beziehungsweise eine Drehachse eines drehbar gelagerten Messhebels parallel auf diese erste Fläche ausgerichtet sein muss. Sind diese Voraussetzungen nicht erfüllt, so ist das Messergebnis zwangsläufig verfälscht.

In diesem Zusammenhang offenbart die US 2005/0039342 A1 ein Verfahren und eine Anordnung zur Messung der Dicke und der Wölbung von Substraten, beispielsweise von Leiterplatten. Dazu weist die Anordnung ein Paar oder mehrere Paare gegenüberliegend angeordneter Linearmessgeräte auf, beispielsweise Messtaster. Mit Hilfe dieser Anordnung kann die Dicke und Wölbung eines zwischen den Linearmessgeräten angeordneten Substrats ermittelt werden.

Die DE 10 2009 011 122 A1 offenbart weiterhin ein Verfahren zum Kalibrieren einer Dickenmesseinrichtung mit mindestens einem berührungslos oder tastend arbeitenden Wegmesssensor. Zunächst erfolgt ein Aufnehmen mindestens zweier unabhängiger Messwerte durch den mindestens einen Wegmesssensor an mindestens zwei vorgebbaren Orten auf einer ersten Oberfläche eines Referenzobjekts. Dann erfolgt ein Feststellen der Verkippung oder räumlichen Lage des Referenzobjekts im Messfeld aus den aufgenommenen Messwerten. Dann erfolgt ein Aufnahmen eines weiteren Messwerts durch den mindestens einen Wegmesssensor an einem in der Messrichtung gelegenen weiteren Ort auf einer der ersten Oberfläche entgegengesetzten zweiten Oberfläche oder auf einem der ersten Oberfläche entgegengesetzten Oberflächenbereich des Referenzobjekts, um einen Dickenwert des Referenzobjekts in der Messrichtung zu ermitteln. Schließlich erfolgt ein Berechnen der Differenz zwischen dem berechneten Dickenwert und der bekannten Dicke des Referenzobjekts zum Erhalt von positions- und verkippungs- oder lageabhängigen Korrekturwerten in dem Teilbereich oder Messfeld, um bei einer Dickenmessung geometrische Fehler und/oder Unlinearitäten des mindestens einen Wegmesssensors in dem Teilbereich oder Messfeld kompensieren zu können.

Die JP 07280526 A offenbart zudem eine Dickenmessmethode für Stahlbleche unter Zuhilfenahme einer Lasermesseinrichtung, welche insbesondere die Messung der Dicke und einer Verkippung der Stahlplatte ermöglicht. Dazu sind auf einer Seite der Stahlplatte drei Lasermesseinrichtungen, auf der anderen Seite eine Lasermesseinrichtung angeordnet. Die drei Lasermesseinrichtungen sind dabei in einer Bewegungsrichtung der Stahlplatte voneinander beabstandet.

Die WO 2011/000665 A1 offenbart außerdem ein Verfahren zur berührungslosen Bestimmung der Dicke einer Materialbahn, insbesondere Faserstoffbahn, mittels einer Sensoranordnung, die wenigstens zwei optische Messeinheiten umfasst, zwischen denen die Materialbahn hindurch geführt ist. Dabei ermitteln auf einander gegenüberliegenden Seiten der Materialbahn angeordnete optische Messeinheiten jeweils deren Abstand zur Materialbahn. Dadurch kann die Dicke der Materialbahn ermittelt werden, sowie der Kippwinkel der Messplatten zur Materialbahn und/oder ein Versatz zwischen den auf einander gegenüberliegenden Seiten der Materialbahn angeordneten optischen Messeinheiten bzw. deren Messplatten.

Die WO 2006/068949 A1 offenbart schließlich ein Verfahren zur berührungslosen Messung der Dicke sich bewegender Geweben oder Blättern. Dazu sind zwei voneinander beabstandete Sensoren vorgesehen, zwischen denen das Gewebe hindurch geführt wird und mit denen die Dicke des Gewebes ermittelt werden kann. Mit Hilfe des ersten Sensors wird auch ein Muster auf die obere Fläche des Gewebes projiziert, mit dem die Ausrichtung beziehungsweise Neigung des Gewebes ermittelt werden kann.

Eine Aufgabe der Erfindung ist es daher, eine verbesserte Messeinrichtung und ein verbessertes Messverfahren anzugeben. Insbesondere soll die Richtigkeit eines Messergebnisses nicht davon abhängen, ob der plattenförmige Gegenstand korrekt auf einer Auflage aufliegt und korrekt ausgerichtet ist.

Diese Aufgabe der Erfindung wird mit einer Biegemaschine gemäß Anspruch 1 gelöst.

Weiterhin wird die Aufgabe der Erfindung mit einem Verfahren gemäß Anspruch 5 gelöst.

Mit Hilfe des genannten Verfahrens ist eine sehr exakte Bestimmung der Dicke eines plattenförmigen Gegenstands möglich, da ein Verdrehen beziehungsweise Verkanten der Messeinrichtung gegenüber dem plattenförmigen Gegenstand berücksichtigt wird. Bei herkömmlichen Messverfahren wird in so einem Fall dagegen eine zu große Dicke angezeigt. Auch hängt die Richtigkeit des Messergebnisses nicht davon ab, ob der plattenförmige Gegenstand korrekt auf einer Auflage aufliegt oder nicht.

Unter einem "Messtaster" wird im Rahmen der Erfindung jede Messeinrichtung verstanden, welche den zu vermessenden Körper beim Messen berührt und dabei die Position des Berührpunkts in wenigstens einer Raumrichtung angibt. Erfindungsgemäß sind unter einem "Messtaster" Vorrichtungen mit linear verschiebbarem Messtössel oder, als nicht-beanspruchtes Beispiel, aber auch mit drehbar gelagertem Messhebel zu verstehen.

Weitere vorteilhafte Ausgestaltungen und Weiterbildungen der Erfindung ergeben sich aus den Unteransprüchen sowie aus der Beschreibung in Zusammenschau mit den Figuren.

In einer günstigen Variante umfasst die Messeinrichtung einen gabelförmigen Halter, wobei der erste Messtaster an einem ersten Gabelfortsatz und der zweite bis vierte Messtaster an einem zweiten Gabelfortsatz angeordnet sind. Durch die Gabel sind die Messtaster in einer vorgegebenen Raumlage zueinander angeordnet. Der Normalabstand der ersten Fläche von der zweiten Fläche kann daher gut berechnet werden.

Erfindungsgemäß weisen die Messtaster je einen linear verschiebbaren Messtössel auf, deren Verschieberichtungen zueinander parallel ausgerichtet sind. Dadurch können die erste bis vierte Position direkt an der Verschiebung der Messtössel abgelesen werden.

Vorteilhaft ist es weiterhin, wenn die Achsen der Messtössel des ersten und des zweiten Messtasters auf einer Geraden liegen. Unter der Voraussetzung dass die erste Fläche respektive die zweite Fläche des zu vermessenden plattenförmigen Gegenstands normal auf die genannte Gerade ausgerichtet ist, kann die Dicke des genannten Gegenstands direkt aus der Differenz zwischen der ersten und der zweiten Position berechnet werden.

Vorteilhaft ist es auch, wenn die Recheneinheit dazu eingerichtet ist,

- den Abstand zwischen der ersten und der zweiten Position zu berechnen,
- die Winkelstellung der zweiten Fläche gegenüber einer Geraden, welche zwischen der ersten Position und der zweiten Position verläuft, anhand der gemessenen zweiten bis vierten Position zu berechnen und
- den Normalabstand der ersten Fläche von der zweiten Fläche anhand des Abstands zwischen der ersten und der zweiten Position sowie der besagten Winkelstellung zu berechnen.

Analog ist es vorteilhaft, wenn

- der Abstand zwischen der ersten und der zweiten Position berechnet wird,
- die Winkelstellung der zweiten Fläche gegenüber einer Geraden, welche zwischen der ersten Position und der zweiten Position verläuft, anhand der gemessenen zweiten bis vierten Position berechnet wird,
- der Normalabstand der ersten Fläche von der zweiten Fläche anhand des Abstands zwischen der ersten und der zweiten Position sowie der besagten Winkelstellung berechnet wird.

Bei dieser Variante der Messeinrichtung wird also der Abstand zwischen der ersten und der zweiten Position berechnet, welcher direkt der Dicke des zu vermessenden Gegenstands entspricht, wenn dieser korrekt zum ersten und zweiten Messtaster ausgerichtet ist. Trifft diese Bedingung nicht zu, wird die Winkelstellung der zweiten Fläche ermittelt und der Abstand zwischen der ersten und der zweiten Position entsprechend der ermittelten Neigung "korrigiert".

Erfindungsgemäß ist die vorgestellte Messeinrichtung in einer Biegemaschine zum Biegen eines plattenförmigen Gegenstands eingebaut, und zwar in einem Zuführbereich für den zu biegenden plattenförmigen Gegenstand. Dadurch kann der zu biegende Biegeteil (z.B. Blech) exakt vermessen und die Biegemaschine hinsichtlich des Pressdrucks und/oder des Verschiebewegs korrekt auf die ermittelte Biegeteildicke eingestellt werden, wodurch eine Reihe von Biegeteilen mit demselben Biegewinkel hergestellt werden können, auch wenn deren Dicke variiert.

Alternativ kann die vorgestellte Messeinrichtung im Bereich einer Biegemaschine angeordnet sein, sodass ein Handhabungsroboter, welcher Biegeteile in die Biegemaschine einlegt, diese vor dem Zuführen in die Biegemaschine in die Messeinrichtung hält, um die Dicke des zu biegenden Biegeteils zu ermitteln.

Erfindungsgemäß werden die erste bis vierte Position im Wesentlichen gleichzeitig gemessen. Dadurch kann dies Messung einerseits sehr schnell erfolgen, andererseits können auch keine Messfehler durch Bewegungen des zu vermessenden Körpers entstehen, so wie diese bei Verfahren der Fall ist, bei denen mehrere Messpunkte sequentiell ermittelt werden.

An dieser Stelle wird angemerkt, dass sich die verschiedenen Ausführungsformen der präsentierten Messeinrichtung sowie die daraus resultierenden Vorteile sinngemäß auch auf das Messverfahren angewandt werden können und umgekehrt.

Zum besseren Verständnis der Erfindung wird diese anhand der nachfolgenden Figuren näher erläutert. Es zeigen:

Fig. 1 ein erstes schematisch dargestelltes Beispiel für eine Messeinrichtung mit linear verschiebbaren Messstösseln;

Fig. 2 eine beispielhafte Anordnung der Berührpunkte auf einem zu vermessenden Gegenstand;

Fig. 3 ein zweites schematisch dargestelltes Beispiel für eine Messeinrichtung mit Rollen zur Abtastung des zu vermessenden Gegenstands;

Fig. 4 ein drittes schematisch dargestelltes, aber nicht-beanspruchtes, Beispiel für eine Messeinrichtung mit drehbar gelagerten Messhebeln und

Fig. 5 eine schematisch dargestellte Anordnung mit einer Biegepresse, einem Roboter und einer Messeinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

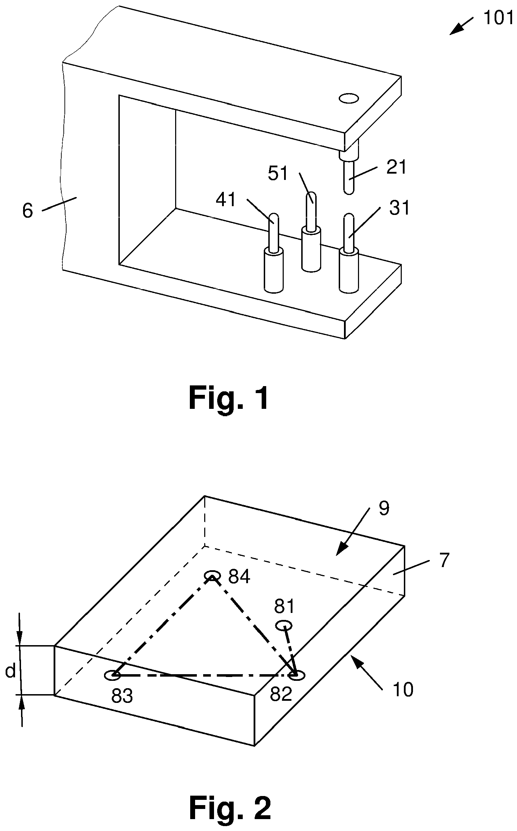

Die Messeinrichtung und das Messverfahren werden nun anhand der Figuren 1 und 2 erläutert, wobei die Fig. 1 ein erstes schematisch dargestelltes Beispiel für eine Messeinrichtung 101 und die Fig. 2 einen zu vermessenden plattenförmigen Gegenstand 7 zeigt.

Die Messeinrichtung 101 zum Messen der Dicke d des plattenförmigen Gegenstands 7, umfasst:

- einen ersten Messtaster 21 zum Messen einer ersten Position 81 eines Berührpunkts des ersten Messtasters 21 mit einer ersten Fläche 9 des plattenförmigen Gegenstands 7,

- einen zweiten Messtaster 31 zum Messen einer zweiten Position 82 eines Berührpunkts des zweiten Messtasters 31 mit einer zweiten Fläche 10 des plattenförmigen Gegenstands 7, welcher der ersten Fläche 9 gegenüber liegt,

- einen dritten Messtaster 41 zum Messen einer dritten Position 83 eines Berührpunkts des dritten Messtasters 41 mit der zweiten Fläche 10 des plattenförmigen Gegenstands 7,

- einen vierten Messtaster 51 zum Messen einer vierten Position 84 eines Berührpunkts des vierten Messtasters 51 mit der zweiten Fläche 10 des plattenförmigen Gegenstands 7, wobei die Positionen 82..84 der Berührpunkte des zweiten, dritten und vierten Messtasters 31..51 voneinander beabstandet sind und

- eine Recheneinheit, welche dazu eingerichtet ist, die dem Normalabstand der ersten Fläche 9 von der zweiten Fläche 10 entsprechende Dicke d des plattenförmigen Gegenstands 7 anhand der gemessenen ersten bis vierten Position 81..84 zu berechnen.

Im vorliegenden Beispiel sind der erste Messtaster 21 an einem ersten Gabelfortsatz und der zweite bis vierte Messtaster 31..51 an einem zweiten Gabelfortsatz eines gabelförmigen Halters 6 angeordnet. Die Messtaster 21..51 weisen je einen linear verschiebbaren Messstössel auf, deren Verschieberichtungen zueinander parallel ausgerichtet sind. Die Achsen der Messstössel des ersten und des zweiten Messtasters 21, 31 liegen in diesem Beispiel darüber hinaus auf einer Geraden.

Die Messstössel können federbelastet sein und auf diese Weise auf den plattenförmigen Gegenstand 7 gedrückt werden. Denkbar ist auch, dass die Messstössel aus- und eingefahren werden können, beispielsweise pneumatisch, hydraulisch, durch einen Elektromagneten oder einen Spindelantrieb. Generell ist es günstig, wenn die Dicke d des plattenförmigen Gegenstands 7 bei einer vorgebbaren Stösselkraft oder einem vorgebbaren Stösseldruck ermittelt wird. Dadurch können reproduzierbare Messergebnisse für die Dicke d erzielt werden. Beispielsweise kann die Stösselkraft durch Vorgabe eines bestimmten Drucks des Pneumatik- oder Hydraulikantriebs oder durch Vorgabe eines bestimmten Stroms für den Elektromagneten respektive für den Elektromotor eingestellt werden. Generell können auch Kraftsensoren in Messtastern 21..51 verbaut sein (zum Beispiel Piezo-Drucksensoren oder Dehnmeßstreifen), um die auftretenden Stösselkräfte bestimmen zu können.

Mit Hilfe der Messeinrichtung 101 ist nun eine sehr exakte Bestimmung der Dicke d des plattenförmigen Gegenstands 7 möglich, da ein Verdrehen beziehungsweise Verkanten der Messeinrichtung 101 gegenüber dem plattenförmigen Gegenstand 7 berücksichtigt wird.

Wie in der Fig. 2 gut zu sehen ist, ist die Verbindungsgerade zwischen der ersten Position 81 und der zweiten Position 82 gegenüber der zweiten Fläche 10, deren Orientierung anhand der zweiten bis vierten Position 82..84 ermittelt wird, geneigt. Eine Messung nach herkömmlichen Verfahren, welche den Abstand zwischen der ersten Position 81 und der zweiten Position 82 ermittelt, würde daher nicht die dem Normalabstand der ersten Fläche 9 von der zweiten Fläche 10 entsprechende Dicke d des plattenförmigen Gegenstands 7 ergeben, sondern eine gegenüber dem wahren Wert d vergrößerte Dicke.

Vorzugsweise wird für die Ermittlung der Dicke d

- der Abstand zwischen der ersten Position 81 und der zweiten Position 82 berechnet,
- die Winkelstellung der zweiten Fläche 10 gegenüber der Geraden, welche zwischen der ersten Position 81 und der zweiten Position 82 verläuft, anhand der gemessenen zweiten bis vierten Position 82..84 berechnet und
- der Normalabstand der ersten Fläche 9 von der zweiten Fläche 10 (das heißt die Dicke d) anhand des Abstands zwischen der ersten Position 81 und der zweiten Position 82 sowie der besagten Winkelstellung berechnet.

Beispielsweise kann die wahre Dicke d über

$$d = x \cdot cos(90 - \alpha)$$

ermittelt werden, wobei x den Abstand zwischen der ersten Position 81 und der zweiten Position 82 und $\alpha$ den Winkel, welcher durch die genannte Gerade und die zweite Fläche 10 eingeschlossen wird, kennzeichnet.

Besonders vorteilhaft ist es generell, wenn die erste bis vierte Position 81..84 im Wesentlichen gleichzeitig gemessen werden. Dadurch kann dies Messung einerseits sehr schnell erfolgen, andererseits können auch keine Messfehler durch Bewegungen des zu vermessenden Körpers 7 entstehen, so wie diese bei Verfahren der Fall ist, bei denen mehrere Messpunkte sequentiell ermittelt werden.

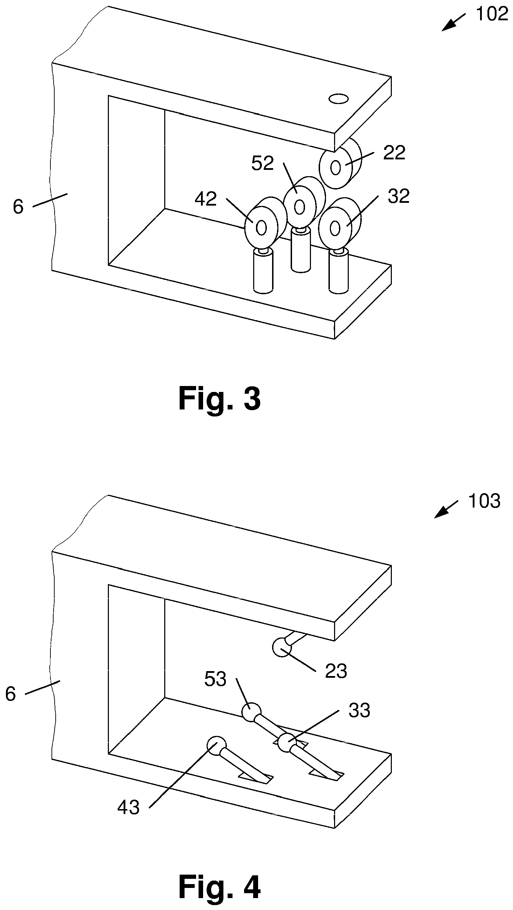

Fig. 3 zeigt eine weitere Variante einer Messeinrichtung 102, bei welcher der Kontakt zu dem zu vermessenden plattenförmigen Gegenstand 7 über Rollen 22..52 hergestellt wird. Die Rollen 22..52 sind auf Stösseln befestigt, die beispielsweise mit einer Spiralfeder oder mit einer Luftfeder vorgespannt sind. Der plattenförmige Gegenstand 7 wird zum Messen einfach in die Öffnung des gabelförmigen Halters 6 geschoben, ein motorisches Aus- und Einfahren der Stössel ist dazu nicht unbedingt notwendig.

Fig. 4 zeigt eine weitere Variante einer Messeinrichtung 103, bei welcher der Kontakt zu dem zu vermessenden plattenförmigen Gegenstand 7 über drehbar gelagerte Messhebel 23..53 hergestellt wird, an deren Ende sich eine kugelförmige Verdickung (z.B. eine Kugel aus Rubin) befindet. Über den Winkel, den ein Messhebel 23..53 beim Messen gegenüber dem Halter 6 einnimmt, und dessen als bekannt vorausgesetzte Länge kann wiederum exakt die Position 81..84 des Berührpunkts mit dem zu vermessenden plattenförmigen Gegenstand 7 ermittelt werden.

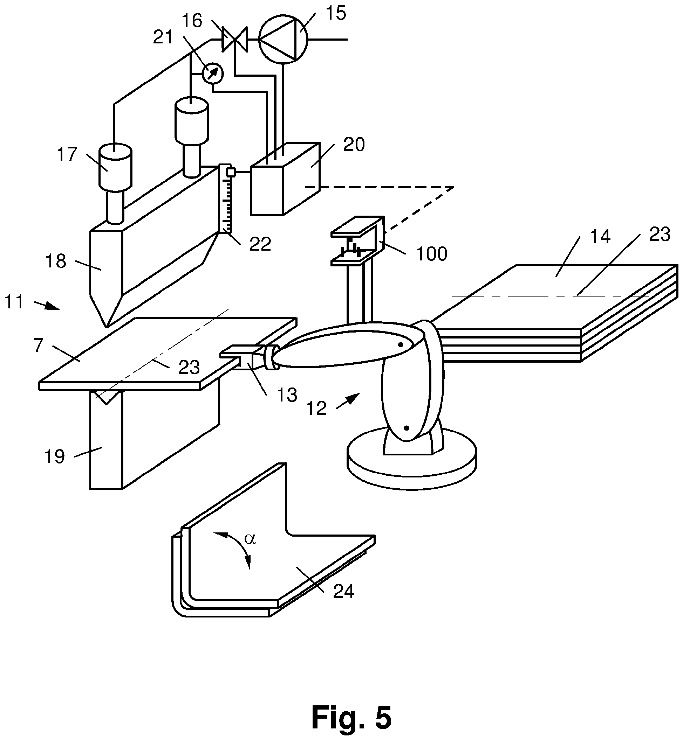

Fig. 5 zeigt eine schematisch dargestellte Anordnung mit einer Biegepresse 11 zum Biegen eines plattenförmigen Gegenstands (Biegeteils) 7, einem Roboter 12, welcher für das Zuführen des Biegeteils 7 in die Biegepresse 11 mit Hilfe eines Greifers 13 vorbereitet ist, und eine Messeinrichtung 100, welche in einem Zuführbereich für den zu biegenden Biegeteil 7 angeordnet ist.

Der Roboter 12 entnimmt bei diesem Beispiel ein ungebogenes Biegeteil 7 von einem Stapel 14 und legt es mit Hilfe seines Greifers 13 in die Biegepresse 11 ein. Durch Aktivieren der Hydraulikpumpe 15 respektive eines Ventils 16 werden die Hydraulikzylinder 17 unter Druck gesetzt, worauf sich das Schwert 18 nach unten in Richtung Matrize 19 bewegt. Durch Steuerung des Pressdrucks und/oder des Verfahrwegs kann der Biegewinkel $\alpha$ beeinflusst werden. Zu diesem Zweck umfasst die Biegepresse 11 eine Steuerung 20, welche mit einem Manometer 21, einem Linearmeßsystem 22 sowie mit der Pumpe 15 respektive dem Ventil 16 verbunden ist. Damit ist es in an sich bekannter Weise möglich, einen beliebigen Pressdruck und einen beliebigen Verfahrweg für das Schwert 18 vorzugeben/zu steuern beziehungsweise zu regeln, um so nach Möglichkeit einen geforderten Soll-Biegewinkel zu erzielen.

An dieser Stelle wird angemerkt dass die Begriffe "Steuern" und "Regeln" wenn nichts anders angegeben synonymisch gebraucht werden. Das heißt dass anstelle einer Steuerung auch eine Regelung vorgesehen werden kann und umgekehrt, wenn nichts anderes angegeben ist.

Nach dem Biegen wird das entlang der Biegelinie 23 gebogene Biegeteil 7 wie in diesem Beispiel dargestellt mit Hilfe des Greifers 13 aus der Biegepresse 11 entnommen und auf einem Stapel 24 oder einem weiteren Transportmittel (z.B. Förderband) abgelegt wird. Auf diese Weise ergibt sich ein vollautomatischer Ablauf bei der Herstellung des Biegeteils 7.

Um die Abweichung zwischen dem Ist-Biegewinkel $\alpha$ und dem Soll-Biegewinkel auch bei toleranzbedingter Variation der Dicke d der Biegeteile 7 möglichst gering zu halten, wird die Dicke d des Biegeteils 7 vor dem Biegen mit Hilfe der Messeinrichtung 100 in der oben beschriebenen Weise bestimmt und ein Pressdruck und/oder ein Verfahrweg und/oder ein davon abhängiger Parameter der Biegepresse 11 durch den Messwert der Biegeteildicke d derart beeinflusst, dass eine Abweichung zwischen einem Ist-Biegewinkel $\alpha$ und einem Soll-Biegewinkel verringert wird.

Dazu hält der Roboter 12 das ungebogene Biegeteil 7 in die Messeinrichtung 100. Die gezeigte Anordnung umfasst Mittel zur Übermittlung eines Messwerts der Biegeteildicke d vom Roboter 12 an die Biegepresse 11, konkret an deren Steuerung 20 (siehe strichlierte Linie). Weiterhin ist die Steuerung 20 für eine Beeinflussung des Pressdrucks und/oder des Verfahrwegs und/oder eines davon abhängigen Parameters der Biegepresse 11 durch den Messwert der Biegeteildicke d eingerichtet ist, derart, dass eine Abweichung zwischen einem Ist-Biegewinkel $\alpha$ und einem Soll-Biegewinkel verringert wird.

Konkret wird die Dicke d des Biegeteils 7 mit Hilfe der Messeinrichtung 100 also ermittelt, bevor das Biegeteil 7 mit Hilfe der Biegepresse 11 gebogen wird. Dieser Messwert wird an die Steuerung 20 übermittelt (z.B. per Draht oder Funk), welche in diesem Beispiel konkret den Pressdruck und den Verfahrweg entsprechend der ermittelten Biegeteildicke d und dem zu erzielenden Soll-Biegewinkel einstellt. Im Speziellen wird der Pressdruck bei steigendem Messwert für die Biegeteildicke d erhöht, der Verfahrweg entsprechend verkürzt. Generell ist es von Vorteil, wenn die Biegeteildicke d auf oder im Bereich der Biegelinie 23 ermittelt wird. Dadurch kann das Biegen des Biegeteils 7 besonders genau erfolgen, da dessen Dicke d an jener Position ermittelt wird, an der es später gebogen wird.

Durch die genannte Maßnahme kann eine Reihe von Biegeteilen 7 mit im Wesentlichen gleichem Ist-Biegewinkel $\alpha$ hergestellt werden, auch wenn deren Dicke d variiert. Ein Nachbiegen ist daher nicht beziehungsweise nur in Ausnahmefällen nötig. Auch kann eine Nachkontrolle eines jeden Biegeteils 7 entfallen, ohne dabei Störungen in einem vollautomatischen Fertigungsablauf zu riskieren.

Trotz der Beeinflussung der Biegepresse 11 mit dem Messwert der Biegeteildicke d ist es günstig, wenn die Abweichung des Ist-Winkels $\alpha$ des gebogenen Biegeteils 7 vom SollWinkel ermittelt und die Beeinflussung der Biegepresse 11 durch den Messwert der Biegeteildicke d derart adaptiert wird, dass eine Abweichung zwischen einem Ist-Biegewinkel $\alpha$ und einem Soll-Biegewinkel verringert wird. Im Speziellen wird der Pressdruck bei zu geringem Ist-Biegewinkel $\alpha$ für die zukünftig herzustellenden Biegeteil 7 erhöht, der Verfahrweg entsprechend verlängert. Dadurch wird die Biegepresse 11 laufend nachjustiert. Prinzipiell reichen dazu stichprobenartige Messungen aus, sodass der Fertigungsablauf dadurch nur wenig gestört wird.

In der Fig. 5 ist die Messeinrichtung 100 abgesetzt von der Biegepresse 11 angeordnet. Selbstverständlich ist es auch möglich, dass die Messeinrichtung 100 Bestandteil der Biegepresse 11 ist. Vorteilhaft ist dann keine gesonderte Bewegung des Roboters 12 zum Messen der Biegeteildicke d erforderlich, da das Ablegen des Biegeteils 7 in der Biegepresse 11 im Bereich der Messeinrichtung 100 ausreichend ist.

Die Ausführungsbeispiele zeigen mögliche Ausführungsvarianten einer erfindungsgemäßen Messeinrichtung 100.. 103 sowie einer erfindungsgemäßen Verwendung derselben, wobei an dieser Stelle bemerkt sei, dass die Erfindung nicht auf die speziell dargestellten Ausführungsvarianten eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

An dieser Stelle wird darauf hingewiesen, dass die Figuren rein schematisch gezeichnet sind und lediglich illustrative Beispiele darstellen. Selbstverständlich können die Messtaster 21..53 der Messeinrichtung 100.. 103 auch anders angeordnet sein. Beispielsweise können der erste Messtaster 21..23 unten statt oben und der zweite bis vierte Messtaster 31..53 oben statt unten angeordnet sein. Auch der Gabelförmige Halter 6 ist keineswegs zwingend, die Messtaster 21..53 können natürlich auch an einer anders geformten Halterung angebracht sein. Darüber hinaus ist die in der Fig. 5 dargestellte Anordnung ebenfalls stark schematisiert dargestellt und kann in der Realität mehr oder auch weniger Bestandteile als dargestellt umfassen.

Der Ordnung halber sei abschließend darauf hingewiesen, dass die in den Figuren gezeigten Bestandteile zum besseren Verständnis ihres Aufbaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | |
|---|---|
| 100..103 | Messeinrichtung |
| 21..23 | erster Messtaster |
| 31..33 | zweiter Messtaster |
| 41..43 | dritter Messtaster |
| 51..53 | vierter Messtaster |
| | |
| 6 | Halterung |
| 7 | plattenförmiger Gegenstand (Biegeteil) |
| 81..84 | erste bis vierte Position |
| 9 | erste Fläche |
| 10 | zweite Fläche |
| | |
| 11 | Biegepresse |
| 12 | Roboter |
| 13 | Greifer |
| 14 | Stapel ungebogener Biegeteile |
| 15 | Pumpe |

| | |
|---|---|
| 16 | Ventil |
| 17 | Hydraulikzylinder |
| 18 | Biegeschwert |
| 19 | Biegematrize |
| 20 | Steuerung |
| | |
| 21 | Manometer |
| 22 | Linearmeßsystem |
| 23 | Biegelinie |
| 24 | Stapel gebogener Biegeteile |
| | |
| α | Ist-Biegewinkel |
| d | Dicke |

**Patentansprüche**

1. Biegemaschine (11) zum Biegen eines plattenförmigen Gegenstands (7) mit einer in einem Zuführbereich für den zu biegenden plattenförmigen Gegenstand (7) angeordneten Messeinrichtung (100..103) zum Messen einer Dicke (d) des plattenförmigen Gegenstands (7), umfassend:

   - einen ersten Messtaster (21..23), welcher dazu eingerichtet ist, eine erste Position (81) eines Berührpunkts des ersten Messtaster (21..23) mit einer ersten Fläche (9) des plattenförmigen Gegenstands (7) zu messen,

   **gekennzeichnet durch**

   - einen zweiten Messtaster (31..33), welcher dazu eingerichtet ist, eine zweite Position (82) eines Berührpunkts des zweiten Messtasters (31..33) mit einer zweiten Fläche (10) des plattenförmigen Gegenstands (7) zu messen, welcher der ersten Fläche (9) gegenüber liegt,
   - einen dritten Messtaster (41..43), welcher dazu eingerichtet ist, eine dritte Position (83) eines Berührpunkts des dritten Messtasters (41..43) mit der zweiten Fläche (10) des plattenförmigen Gegenstands (7) zu messen,
   - einen vierten Messtaster (51..53), welcher dazu eingerichtet ist, eine vierte Position (84) eines Berührpunkts des vierten Messtasters (51..53) mit der zweiten Fläche (10) des plattenförmigen Gegenstands (7) zu messen, wobei die Positionen (82..84) der Berührpunkte des zweiten, dritten und vierten Messtasters (31..53) voneinander beabstandet und im Dreieck angeordnet sind und
   - eine Recheneinheit, welche dazu eingerichtet ist, die dem Normalabstand der ersten Fläche (9) von der zweiten Fläche (10) entsprechende Dicke (d) des plattenförmigen Gegenstands (7) anhand der im Wesentlichen gleichzeitig gemessenen ersten bis vierten Position (81..84) zu berechnen, wobei
- die Messtaster (21..51, 22..52) je einen linear verschiebbaren Messtössel aufweisen, deren Verschieberichtungen zueinander parallel ausgerichtet sind und die a) ein- /ausfahrbar sind und/oder b) zur Messung bei einer vorgebbaren Stösselkraft oder einem vorgebbaren Stösseldruck eingerichtet sind.

2. Messeinrichtung (100..103) nach Anspruch 1, **gekennzeichnet durch** einen gabelförmigen Halter (6), wobei der erste Messtaster (21..23) an einem ersten Gabelfortsatz und der zweite bis vierte Messtaster (31..53) an einem zweiten Gabelfortsatz angeordnet sind.

3. Messeinrichtung (100..103) nach Anspruch 1 oder 2, **dadurch gekennzeichnet, dass** die Achsen der Messtössel des ersten und des zweiten Messtasters (21, 22, 51, 52) auf einer Geraden liegen.

4. Messeinrichtung (100..103) nach einem der Ansprüche 1 bis 3, **dadurch gekennzeichnet, dass** die Recheneinheit dazu eingerichtet ist,

   - den Abstand zwischen der ersten Position (81) und der zweiten Position (82) zu berechnen,
   - die Winkelstellung der zweiten Fläche (10) gegenüber einer Geraden, welche zwischen der ersten Position (81) und der zweiten Position (82) verläuft, anhand der gemessenen zweiten bis vierten Position (82..84) zu berechnen und
   - den Normalabstand der ersten Fläche (9) von der zweiten Fläche (10) anhand des Abstands zwischen der ersten Position (81) und der zweiten Position (82) sowie der besagten Winkelstellung zu berechnen.

5. Verfahren zum Biegen eines plattenförmigen Gegenstands (7), bei dem eine Dicke (d) des plattenförmigen Gegenstands (7) gemessen wird, wobei eine erste Position (81) eines Berührpunkts eines ersten Messtasters (21..23) mit einer ersten Fläche (9) des plattenförmigen Gegenstands (7) gemessen wird,
   **gekennzeichnet durch** die Schritte

   - Messen einer zweiten Position (82) eines Berührpunkts eines zweiten Messtasters (31..33) mit einer zweiten Fläche (10) des plattenförmigen Gegenstands (7), welcher der ersten Fläche (9) gegenüber liegt,
   - Messen einer dritten Position (83) eines Berührpunkts eines dritten Messtasters (41..43) mit der zweiten Fläche (10) des plattenförmigen Gegenstands (7),
   - Messen einer vierten Position (84) eines Berührpunkts eines vierten Messtasters (51..53) mit der zweiten Fläche (10) des plattenförmigen Gegenstands (7), wobei die Positionen (82..84) der Berührpunkte des zweiten, dritten und vierten Messtasters (31..53) voneinander beabstandet und im Dreieck angeordnet sind und
- Berechnen der dem Normalabstand der ersten Fläche (9) von der zweiten Fläche (10) entsprechende Dicke (d) des plattenförmigen Gegenstands (7) anhand der im Wesentlichen gleichzeitig gemessenen ersten bis vierten Position (81..84) wobei
- die Messung mit Hilfe von Messtastern (21..51, 22..52) erfolgt, die je einen linear verschiebbarem Messtössel aufweisen, deren Verschieberichtungen zueinander parallel ausgerichtet sind, und wobei a) die Messstössel ein- und ausgefahren werden und/oder b) die Messung bei einer vorgebbaren Stösselkraft oder einem vorgebbaren Stösseldruck durchgeführt wird.

6. Verfahren nach Anspruch 5, **dadurch gekennzeichnet, dass**

    - der Abstand zwischen der ersten Position (81) und der zweiten Position (82) berechnet wird,
    - die Winkelstellung der zweiten Fläche (10) gegenüber einer Geraden, welche zwischen der ersten Position (81) und der zweiten Position (82) verläuft, anhand der gemessenen zweiten bis vierten Position (82..84) berechnet wird und
    - der Normalabstand der ersten Fläche (9) von der zweiten Fläche (10) anhand des Abstands zwischen der ersten Position (81) und der zweiten Position (82) sowie der besagten Winkelstellung berechnet wird.

**Claims**

1. Bending machine (11) for bending a plate-shaped object (7), having a measurement device (100 ... 103) disposed in a feed region for the plate-shaped object (7) to be bent, for measuring a thickness (d) of the plate-shaped object (7), comprising:

    - a first measurement sensor (21 ... 23), which is set up for measuring a first position (81) of a contact point of the first measurement sensor (21 ... 23) with a first surface (9) of the plate-shaped object (7),

    **characterized by**

    - a second measurement sensor (31 ... 33), which is set up for measuring a second position (82) of a contact point of the second measurement sensor (31 ... 33) with a second surface (10) of the plate-shaped object (7), which lies opposite to the first surface (9),
    - a third measurement sensor (41 ... 43), which is set up for measuring a third position (83) of a contact point of the third measurement sensor (41 ... 43) with the second surface (10) of the plate-shaped object (7),
    - a fourth measurement sensor (51 ... 53), which is set up for measuring a fourth position (84) of a contact point of the fourth measurement sensor (51 ... 53) with the second surface (10) of the plate-shaped object (7), wherein the positions (82 ... 84) of the contact points of the second, third, and fourth measurement sensors (31 ... 53) are spaced apart from one another and disposed in a triangle, and
    - a computer unit, which is set up for calculating the thickness (d) of the plate-shaped object (7), which corresponds to the normal distance of the first surface (9) from the second surface (10), on the basis of the first to fourth positions (81 ... 84), which are measured essentially at the same time, wherein
    - the measurement sensors (21 ... 51, 22 ... 52) each have a linearly displaceable measurement plunger, the displacement directions of which are oriented parallel to one another, and which are a) retractable/extendable and/or b) are set up for measuring at a predeterminable plunger force or a predeterminable plunger pressure.

2. Measurement device (100 ... 103) according to claim 1, **characterized by** a fork-shaped holder (6), wherein the first measurement sensor (21 ... 23) is disposed on a first fork extension, and the second to fourth measurement sensors (31 ... 53) are disposed on a second fork extension.

3. Measurement device (100 ... 103) according to claim 1 or 2, **characterized in that** the axes of the measurement plungers of the first and the second measurement sensor (21, 22, 51, 52) lie on a straight line.

4. Measurement device (100 ... 103) according to any one of claims 1 to 3, **characterized in that** the computer unit is set up for

    - calculating the distance between the first position (81) and the second position (82),
    - calculating the angular position of the second surface (10) relative to a straight line that runs between the first position (81) and the second position (82), on the basis of the measured second to fourth positions (82 ... 84), and
    - calculating the normal distance of the first surface (9) from the second surface (10) on the basis of the distance between the first position (81) and the second position (82), as well as the said angular position.

**5.** Method for bending a plate-shaped object (7), in which a thickness (d) of the plate-shaped object (7) is measured, wherein a first position (81) of a contact point of a first measurement sensor (21 ... 23) with a first surface (9) of the plate-shaped object (7) is measured,
**characterized by** the steps

- measuring a second position (82) of a contact point of a second measurement sensor (31 ... 33) with a second surface (10) of the plate-shaped object (7), which lies opposite the first surface (9),
- measuring a third position (83) of a contact point of a third measurement sensor (41 ... 43) with the second surface (10) of the plate-shaped object (7),
- measuring a fourth position (84) of a contact point of a fourth measurement sensor (51 ... 53) with the second surface (10) of the plate-shaped object (7), wherein the positions (82 ... 84) of the contact points of the second, third, and fourth measurement sensors (31 ... 53) are spaced apart from one another and disposed in a triangle, and
- calculating the thickness (d) of the plate-shaped object (7), which corresponds to the normal distance of the first surface (9) from the second surface (10), on the basis of the measured first to fourth positions (81 ... 84), which are essentially measured at the same time, wherein
- measuring takes place by means of measurement sensors (21 ... 51, 22 ... 52) each of which has a linearly displaceable measurement plunger and, the displacement directions of which are oriented parallel to one another, and wherein a) the measurement plungers are retracted and extended and/or b) the measurement is carried out at a predeterminable plunger force or a predeterminable plunger pressure.

**6.** Method according to claim 5, **characterized in that**

- the distance between the first position (81) and the second position (82) is calculated,
- the angular position of the second surface (10) relative to a straight line that runs between the first position (81) and the second position (82) is calculated on the basis of the measured second to fourth position (82 ... 84), and
- the normal distance of the first surface (9) from the second surface (10) is calculated on the basis of the distance between the first position (81) and the second position (82), as well as the said angular position.

**Revendications**

**1.** Machine de pliage (11) pour le pliage d'un objet en forme de plaque (7) avec un dispositif de mesure (100..103) disposé dans une partie d'introduction pour l'objet en forme de plaque (7) à plier, pour la mesure d'une épaisseur (d) de l'objet en forme de plaque (7), comprenant :

- un premier palpeur de mesure (21..23), qui est conçu pour mesurer une première position (81) d'un point de contact du premier palpeur de mesure (21..23) avec une première surface (9) de l'objet en forme de plaque (7),

**caractérisé par**

- un deuxième palpeur de mesure (31..33, qui est conçu pour mesurer une deuxième position (82) d'un point de contact du deuxième palpeur de mesure (31..33) avec une deuxième surface (10) de l'objet en forme de plaque (7), qui se trouve en face de la première surface (9).
- un troisième palpeur de mesure (41..43), qui est conçu pour mesurer une troisième position (83) d'un point de contact du troisième palpeur de mesure (41..43) avec la deuxième surface (10) de l'objet en forme de plaque (7),
- un quatrième palpeur de mesure (51..53), qui est conçu pour mesurer une quatrième position (84) d'un point de contact du quatrième palpeur de mesure (51..53) avec la deuxième surface (10) de l'objet en forme de plaque (7), les positions (82..84) des points de contact du deuxième, troisième et quatrième palpeur de mesure (31..53) étant éloignées entre elles et étant disposées en triangle et
- une unité de calcul, qui est conçue pour calculer l'épaisseur (d) de l'objet en forme de plaque (7) correspondant à la distance normale entre la première surface (9) et la deuxième surface (10) à l'aide des première à quatrième positions (81..84) mesurées globalement simultanément,
- les palpeurs de mesure (21..51, 22..52) comprenant chacun un poussoir de mesure coulissant linéairement, dont les directions de coulissement sont orientées parallèlement et qui a) peuvent être rentrés/sortis et/ou b) sont conçus pour la mesure dans le cas d'une force de poussoir prédéterminée ou d'une pression de poussoir prédéterminée.

**2.** Dispositif de mesure (100.. 103) selon la revendication 1, **caractérisé par** un support en forme de fourche (6), le premier palpeur de mesure (21..23) étant disposé au niveau d'un premier prolongement de la fourche et les deuxième à quatrième palpeurs de mesure (31..53) étant disposés au niveau d'un deuxième prolongement de la fourche.

**3.** Dispositif de mesure (100.. 103) selon la revendication 1 ou 2, **caractérisé en ce que** les axes des poussoirs de mesure du premier et du deuxième palpeurs de mesure (21, 22, 51, 52) se trouvent sur une droite.

**4.** Dispositif de mesure (100..103) selon l'une des revendications 1 à 3, **caractérisé en ce que** l'unité de calcul est conçue

  - pour calculer la distance entre la première position (81) et la deuxième position (82),
  - pour calculer la position angulaire de la deuxième surface (10) par rapport à une droite qui s'étend entre la première position (81) et la deuxième position (82), à l'aide des deuxième à quatrième positions (82..84) mesurées et
  - pour calculer la distance normale entre la première surface (9) et la deuxième surface (10) à l'aide de la distance entre la première position (81) et la deuxième position (82) ainsi que la position angulaire mentionnée.

**5.** Procédé de pliage d'un objet en forme de plaque (7), dans lequel une épaisseur (d) de l'objet en forme de plaque (7) est mesurée, une première position (81) d'un point de contact d'un premier palpeur de mesure (21..23) avec une première surface (9) de l'objet en forme de plaque (7) étant mesurée, **caractérisé par** les étapes suivantes :

  - mesure d'une deuxième position (82) d'un point de contact d'un deuxième palpeur de mesure (31..33) avec une deuxième surface (10) de l'objet en forme de plaque (7), qui se trouve en face de la première surface (9),
  - mesure d'une troisième position (83) d'un point de contact d'un troisième palpeur de mesure (41..43) avec la deuxième surface (10) de l'objet en forme de plaque (7),
  - mesure d'une quatrième position (84) d'un point de contact d'un quatrième palpeur de mesure (51..53) avec la deuxième surface (10) de l'objet en forme de plaque (7), les positions (82..84) des points de contact des deuxième, troisième et quatrième palpeurs de mesure (31..53) étant éloignées les unes des autres et étant disposées en triangle et
  - calcul de l'épaisseur (d) de l'objet en forme de plaque (7) correspondant à la distance normale entre la première surface (9) et la deuxième surface (10), à l'aide des première à quatrième positions (81..84) mesurées globalement simultanément,
  - la mesure ayant lieu à l'aide de palpeurs de mesure (21..51, 22..52) qui comprennent chacun un poussoir de mesure coulissant linéairement, dont les directions de coulissement sont orientées parallèlement entre elles et a) les poussoirs de mesure étant rentrés et sortie et/ou b) la mesure étant effectuée dans le cas d'une force de poussoir prédéterminée ou d'une pression de poussoir prédéterminée.

**6.** Procédé selon la revendication 5, **caractérisé en ce que**

  - la distance entre la première position (81) et la deuxième position (82) est calculée,
  - la position angulaire de la deuxième surface (10) par rapport à une droite, qui s'étend entre la première position (81) et la deuxième position (82), à l'aide des deuxième à quatrième positions (82..84) mesurées, est calculée et
  - la distance normale entre la première surface (9) et la deuxième surface (10) est calculée à l'aide de la distance entre la première position (81) et la deuxième position (82) ainsi que de la position angulaire mentionnée.

101

6

51

41

21

31

**Fig. 1**

9

7

84

81

83

82

10

d

**Fig. 2**

102

52
22
42
32
6

**Fig. 3**

103

6
23
53
33
43

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4008149 A1
- US 20050039342 A1
- DE 102009011122 A1
- JP 07280526 A
- WO 2011000665 A1
- WO 2006068949 A1